# EUROPÄISCHE PATENTSCHRIFT

(11) **EP 2 923 546 B1**
(45) Veröffentlichungstag und Bekanntmachung des Hinweises auf die Patenterteilung: **23.11.2016**
(21) Anmeldenummer: 15401022.7
(22) Anmeldetag: 17.03.2015
(51) Int. Cl.: A01C 17/00

(54) **VERFAHREN UND VORRICHTUNG ZUM BESTIMMEN EINER VERTEILUNG VON DÜNGERKÖRNERN**
METHOD AND DEVICE FOR DETERMINING A DISTRIBUTION OF FERTILIZER GRAINS
PROCÉDÉ ET DISPOSITIF DESTINÉS À DÉTERMINER UN DISTRIBUTION D'ENGRAIS

(30) Priorität: 24.03.2014 DE 102014103964
(43) Veröffentlichungstag der Anmeldung: 30.09.2015
(73) Patentinhaber: Amazonen-Werke H. Dreyer GmbH & Co. KG, 49205 Hasbergen (DE)
(72) Erfinder: Scheufler, Bernd, 49205 Hasbergen (DE); Rahe, Florian, 49504 Lotte (DE)

(56) Entgegenhaltungen:
- DD-A1- 211 051
- DD-A1- 213 817
- DE-A1- 1 457 844
- DE-A1- 10 327 129
- DE-A1- 19 500 824
- DE-A1-102008 052 269

## Beschreibung

Die Erfindung betrifft ein Verfahren und eine Vorrichtung zum Bestimmen einer Verteilung von Düngerkörnern, insbesondere quer zur Fahrrichtung eines Düngerstreuers.

Beim Ausstreuen von Düngerkörnern ist die Verteilung der Düngerkörner in einer Richtung quer zur Fahrtrichtung eines Düngerstreuers an die gewünschte Arbeitsbreite anzupassen. Das Fließverhalten und das Flugverhalten der Düngerkörner hängen hierbei unter anderem von der Korngröße, Kornform, Reindichte, Schüttdichte und Kornfestigkeit ab. Für unterschiedliche Düngerstreuer lassen sich hierbei die empfohlenen Einstellwerte unter Berücksichtigung der jeweiligen Düngersorte aus Datenbanken abrufen. Obwohl sich die Arbeitsbreite des Düngerstreuers damit prinzipiell auf geeignete Weise einstellen lässt, lassen sich Abweichungen von den erwarteten Verteilungen der Düngerkörner quer zur Fahrtrichtung des Düngerstreuers nicht immer vermeiden. Grund hierfür sind in erster Linie Veränderungen der Düngerqualität, beispielsweise bei Änderungen der Luftfeuchte, oder unzureichende Daten für bestimmte Düngersorten. Die tatsächliche Verteilung der Düngerkörner quer zur Fahrtrichtung des Düngerstreuers muss dann in der praktischen Anwendung überprüft werden.

Zu diesem Zweck ist aus der DE 10 2004 017 075 A1 beispielsweise eine Messschale bekannt, bei der eine Auffangfläche für Düngerkörner durch sogenannte Antispritzverlustgitter rasterförmig unterteilt ist. Die Messschale ist auf diese Weise in eine Vielzahl von Teilschalen unterteilt, in denen Düngerkörner aufgefangen und gesammelt werden. Die derart gesammelten Fraktionen werden dann ausgewogen. Dieses Vorgehen ist allerdings vergleichsweise umständlich und zeitaufwendig.

Als Alternative schlägt die DE 103 27 129 A1 ein Bild gebendes Verfahren vor, bei dem ein Fahrzeug mit einer darauf installierten Kamera quer zu den Fahrspuren eines Düngerstreuers über die ausgestreuten Düngerkörner gefahren wird. Hierbei werden mehrere Kamerabilder der bestreuten Ackerfläche aufgenommen und die Verteilung der abgebildeten Düngerkörner ermittelt. Dies erfordert jedoch eine vergleichsweise aufwändige Bildverarbeitung, da die Düngerkörner zuverlässig vom Ackerboden unterschieden werden müssen. Hierbei sind außerdem Störfaktoren zu berücksichtigen, wie beispielsweise wechselnde Beleuchtung und Schattenwurf.

Es besteht somit der Bedarf für Verfahren und Vorrichtungen zum Bestimmen einer Verteilung von Düngerkörnern, bei denen sich die Handhabung und/oder der apparative Aufwand reduzieren lassen.

Die gestellte Aufgabe wird mit einem Verfahren nach Anspruch 1 gelöst. Demnach eignet sich dieses insbesondere zum Bestimmen einer Verteilung von Düngerkörnern quer zur Fahrtrichtung eines Düngerstreuers und umfasst die Schritte: a) Auslegen wenigstens einer Haftmatte/-platte zum Auffangen und Festhalten ausgestreuter Düngerkörner; b) Ausstreuen der Düngerkörper beim Überfahren eines von der Haftmatte/-platte bedeckten Bodenbereichs mit einem Düngerstreuer; c) Abbilden der bestreuten Haftmatte/-platte in wenigstens einem digitalen Kamerabild; und d) Lokalisieren der Düngerkörner im Kamerabild und Berechnen einer Ist-Verteilung der Düngerkörner auf der Haftmatte/-platte, insbesondere entlang mehrerer Haftmatten/-platten.

Unter einer erfindungsgemäßen Haftmatte/-platte ist eine auslegbare Auffangfläche zu verstehen, die auftreffende Düngerkörner im Wesentlichen am Ort ihres Auftreffens einfängt und festhält. Die Düngerkörner werden dann vorzugsweise einzeln und/oder in kleinen Gruppen in den Auffangräumen festgehalten und/oder derart festgehalten, dass die Düngerkörner einzeln und/oder in kleinen Gruppen erkannt und ausgewertet werden können.

Dies ist im Gegensatz zu einem Raster aus herkömmlichen Auffangschalen zu verstehen, bei denen die Rasterweite und Größe der Auffangschalen beispielsweise das Zwanzigfache bis Fünfzigfache des mittleren Korndurchmessers beträgt, so dass derart aufgefangene Düngerkörner im Sinne eines gesammelten Probenvolumens gemeinsam ausgewertet werden müssen, beispielsweise durch gemeinsames Auswiegen. Demgegenüber wird die Düngerverteilung erfindungsgemäß durch Abbilden der der auf der Haftmatte/- platte liegenden Düngerkörner ermittelt, also am Ort ihres Auftreffens und ohne Transfer der Düngerkörner zu einer separaten Messvorrichtung.

Vorzugsweise werden die Düngerkörner mit einer Rasterweite von höchstens 10 mm am Ort ihres Auftreffens festgehalten. Das heißt, Körner der meisten herkömmlichen Düngersorten mit ihren mittleren Korndurchmessern von 1 bis 3 mm können dann einzeln Bild gebend erkannt und ausgewertet werden. Die Haftmatte/-platte weist zu diesem Zweck eine Vielzahl regelmäßig verteilter Auffangräume auf, deren Rasterweite nicht mehr als 10 mm beträgt. Besonders günstig ist eine Rasterweite von nicht mehr als 5 mm.

Vorzugsweise wird der Schritt d) mit einem mobilen Rechner, insbesondere in einem programmierbaren Mobilfunkgerät durchgeführt. Alternativ oder in Kombination damit werden Bilddaten zur Durchführung des Schrittes d) an einem zentralen Düngeservice-Server übertragen. In einem Mobilfunkgerät, beispielsweise einem Mobiltelefon, lassen sich Rechen-Applikationen zur Bildauswertung der abgebildeten Haftmatte/-platte und Düngerkörner installieren. Auf einem Düngeservice-Server lassen sich vorteilhaft komplexe Auswerteverfahren durchführen.

Vorzugsweise umfasst das erfindungsgemäße Verfahren ferner einen Schritt e), in dem wenigstens ein Soll-Einstellwert des Düngerstreuers auf Grundlage wenigstens eines Ist-Einstellwerts des Düngerstreuers und der berechneten Ist-Verteilung der Düngerkörner ermittelt wird. Aus der ermittelten Ist-Verteilung der Düngerkörner und dem Ist-Einstellwert des Düngerstreuers lässt sich somit eine Korrekturmaßnahme ableiten, um die Ist-Verteilung der Düngerkörner an eine geforderte Arbeitsbreite des Düngerstreuers anzupassen. Die Einstellwerte betreffen wenigstens einen Maschinenparameter des Düngerstreuers, der Einfluss auf die tatsächlich erzeugte Düngerverteilung nimmt.

Vorzugsweise wird der Schritt e) in dem mobilen Rechner, insbesondere in dem programmierbaren Mobilfunkgerät durchgeführt. Somit lassen sich Ist-Einstellwerte des Düngerstreuers mit Hilfe eines kompakten Geräts eigenständig vor Ort korrigieren. Die Programmierbarkeit gewährleistet eine flexible Anpassung und Aktualisierung des erfindungsgemäßen Verfahrens.

Vorzugsweise wird wenigstens der Schritt e) in einem Bordrechner zur Steuerung des Düngerstreuers durchgeführt. Ist-Einstellwerte lassen sich dann beispielsweise automatisch abfragen und mit der ermittelten Düngerverteilung abgleichen.

Vorzugsweise ersetzt der Bordrechner dann ferner den Ist-Einstellwert durch den ermittelten Soll-Einstellwert. Dies ermöglicht eine automatische Korrektur der Ist-Einstellwerte.

Vorzugsweise wird die wenigstens eine Haftmatte/-platte im Wesentlichen quer zur Fahrtrichtung des Düngerstreuers, insbesondere linienförmig, ausgelegt. Beispielsweise ließe sich eine flexible streifenförmige Haftmatte/-platte quer zur Fahrtrichtung des Düngerstreuers ausrollen. Ebenso können mehrere Haftmatten/- platten linienförmig aneinander gereiht werden.

Die gestellte Aufgabe wird ebenso mit einem digitalen Programm, insbesondere einer Mobilfunkapplikation, gelöst, die zur Durchführung des Schrittes d) gemäß Anspruch 1 und/oder des Schrittes e) gemäß Anspruch 3 ausgebildet ist. Dadurch lassen sich die erfindungsgemäßen Verfahrensschritte auf herkömmlichen Mobilfunkgeräten, wie beispielsweise Mobilfunktelefonen, durchführen.

Die erfindungsgemäße Aufgabe wird ebenso mit einer Vorrichtung zum Auffangen von einem Düngerstreuer ausgestreuter Düngerkörnern gelöst, die eine auslegbare Auffangfläche definierter Größe umfasst. Erfindungsgemäß ist die Auffangfläche als Haftmatte/-platte mit einem Raster aus von oben einsehbaren Auffangräumen für die Düngerkörner ausgebildet mit einer Rasterweite von nicht mehr als 10 mm, insbesondere nicht mehr als 5 mm.

Herkömmliche Düngerkörner, deren mittlerer Durchmesser je nach Sorte beispielsweise 1 bis 3 mm beträgt, lassen sich somit im Wesentlichen am Ort ihres Auftreffens einfangen und festhalten. Die Haftmatte/-platte dient dann als ein standardisierter und somit vom befahrenen Boden unabhängiger Bildhintergrund für die Bild gebende Vermessung der Düngerverteilung in der Draufsicht. Vorzugsweise ist wenigstens eine wirksame Seite der Haftmatte/-platte nicht heller ist als Graustufe 50%, wie beispielsweise 122 von 255 (weiß). Da die meisten handelsüblichen Düngersorten vergleichsweise hell sind, ist eine demgegenüber dunklere Messfläche besonders vorteilhaft für eine kontrastreiche Darstellung der Düngerkörner in Kamerabildern. Auf dunklem Bildhintergrund lassen sich ferner durch wechselnde Lichtverhältnisse und/oder Schattenwurf verursachte Auswertungsfehler minimieren.

Die Haftmatte/-platte ist dann insbesondere im Wesentlichen gleichmäßig eingefärbt und/oder abgetönt. Nichtsdestoweniger können darauf auch Hilfslinien, Größenmaßstäbe, Identifizierungsmarken oder dergleichen vorhanden sein, um die Vermessung und Identifizierung einzelner Kamerabilder zu erleichtern und/oder diese zu einem Panoramabild oder dergleichen aneinander zu reihen.

Graustufen im Sinne der Erfindung sind objektseitig definiert, also durch herstellungsbedingte Pigmentierung der Haftmatte/-platte oder dergleichen, nicht bildseitig, da die im Kamerabild letzten Endes resultierenden Graustufen von den jeweiligen Lichtverhältnissen, Aufnahmeparametern und/oder der Bildbearbeitung abhängen.

Vorzugsweise weist die Haftmatte/-platte eine Trägerschicht auf sowie Stäbchen und/oder Zungen, die von der Trägerschicht um die Auffangräume herum derart abstehen, dass sie auftreffende Düngerkörner in die Auffangräume leiten und dort festhalten. Das heißt, die Auffangräume werden im Wesentlichen durch die Trägerschicht und die Stäbchen / Zungen begrenzt.

Da die Auffangräume nur geringfügig größer sind als die einzufangenden Düngerkörner, nehmen die Auffangräume entweder nur einzelne Düngerkörner auf oder kleine Gruppen von Düngerkörner, die sich als solche erkennen lassen. Somit werden die Düngerkörner in den Auffangräumen und somit im Sinne der Erfindung am Ort ihres Auftreffens erkannt und lokalisiert. Dies ermöglicht eine gleichermaßen genaue und einfache Bild gebende Bestimmung der Ist-Verteilung, da die Düngerkörner unmittelbar auf der Haftmatte/-platte liegend registriert werden.

Vorzugsweise sind am freien Ende der Stäbchen und/oder Zungen Haken, Widerhaken und/oder Pilzköpfe ausgebildet. Dadurch lässt sich vermeiden, dass aufgefangene Düngerkörner aus den Auffangräumen herausspringen. Die Stäbchen und/oder Zungen bilden dann beispielsweise eine Struktur aus, die der Hakenseite eines Klettverschlusses ähnelt.

Vorzugsweise weist die Haftmatte/-platte zwei wirksame Seiten im Sinne von Auffangflächen auf, die sich hinsichtlich Farbe und/oder Graustufe und/oder hinsichtlich der Rasterweite unterscheiden. Dadurch lassen sich die erfindungsgemäßen Haftmatten/-platten durch Wenden an unterschiedlich gefärbte Düngersorten oder unterschiedliche Korngrößen anpassen. Insbesondere sind dann die Stäbchen und/oder Zungen auf beiden Seiten der Trägerschicht ausgebildet, wobei sich die Seiten hinsichtlich ihrer Farbe und/oder Graustufe und/oder hinsichtlich der Größe der zwischen den Stäbchen und/oder Zungen ausgebildeten Auffangräume unterscheiden.

Vorzugsweise sind die Trägerschicht, Stäbchen und/oder Zungen elastisch verformbar ausgebildet. Beim Auftreffen der Düngerkörner auf elastische Stäbchen / Zungen können insbesondere diejenigen Strukturen, die die Auffangräume nach oben hin begrenzen, wie beispielsweise Haken, Pilzköpfen oder dergleichen, seitlich ausweichen, um die Düngerkörner in die Auffangräume zu leiten. Gleichzeitig wird das Festhalten der Düngerkörner durch Zurückfedern dieser Strukturen in ihre Ausgangsposition ermöglicht. Außerdem lassen sich die Düngerkörner dann nach der Messung aus den Auffangräumen ausklopfen. Dies gewährleistet eine Wiederverwendbarkeit der erfindungsgemäßen Haftmatten/- platten und vermeidet eine fehlerhafte Bestimmung der Verteilung der Düngerkörner aufgrund von Düngerresten aus vorangegangenen Messungen. Eine flexible Trägerschicht begünstigt ebenso das Ausklopfen und ermöglicht je nach Flexibilität ein Ausrollen bahnförmiger Haftmatten/-platten.

Eine bevorzugte Ausführungsform der erfindungsgemäßen Vorrichtung ist in der Zeichnung dargestellt. Es zeigen:
- Fig. 1: eine schematische Darstellung der erfindungsgemäßen Vorrichtung und von erfindungsgemäß aufgenommenen Kamerabildern; und

- Fig. 2: eine schematische Darstellung einer erfindungsgemäßen Haftmatte/-platte.

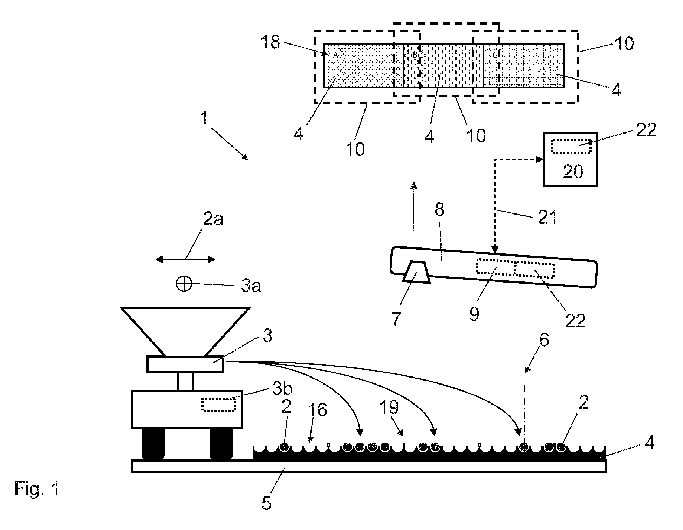

Wie die Fig. 1 erkennen lässt, umfasst die erfindungsgemäße Vorrichtung 1 zum Bestimmen einer örtlichen Verteilung von Düngerkörnern 2, die von einem Düngerstreuer 3 insbesondere in einer Richtung 2a quer zu dessen Fahrtrichtung 3a ausgestreut werden, wenigstens eine Haftmatte/-platte 4, die im Wesentlichen quer zur Fahrtrichtung 3a auf einer Ackerfläche 5 oder dergleichen ausgelegt wird. Die nachfolgend noch ausführlicher beschriebene und zum besseren Verständnis nicht größenmaßstäblich dargestellte Haftmatte/-platte 4 ist derart ausgebildet, dass sie vom Düngerstreuer 3 weg geschleuderte Düngerkörner 2 im Wesentlichen am Ort 6 ihres Auftreffens einfängt und festhält.

Es ist ferner eine Kamera 7 vorhanden, die vorzugsweise in ein Mobilfunkgerät 8, wie beispielsweise ein Mobiltelefon, integriert ist. In das Mobilfunkgerät 8 integriert ist ferner eine Recheneinheit 9, die zur Bildauswertung von Kamerabildern 10 ausgebildet ist, in denen die mit Düngerkörnern 2 bestreute Haftmatte/-platte 4 in einer Draufsicht abgebildet wird. Hierfür können mehrere Haftmatten/-platten 4 aneinander gelegt werden, wie dies in der Fig. 1 oben schematisch angedeutet ist. Ebenso wäre es denkbar, die Haftmatte/-platte 4 als streifenförmige flexible Bahn auszubilden, die sich beispielsweise ausrollen lässt.

Der von der wenigstens einen Haftmatten/-platte 4 bedeckte Bodenbereich wird vorzugsweise in überlappenden Kamerabildern 10 abgebildet, derart, dass sich die Kamerabilder 10 für die Bildauswertung zu einem virtuellen Panoramabild oder dergleichen zusammensetzen lassen.

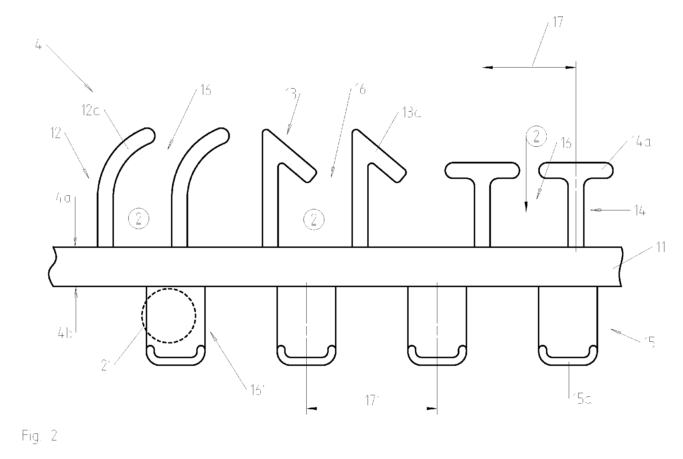

Bevorzugte Ausführungsformen der Haftmatte/-platte 4 mit unterschiedlichen erfindungsgemäß abstehenden Strukturen zum Auffangen und Festhalten der Düngerkörner sind in der Fig. 2 beispielhaft schematisch dargestellt. Es ist sowohl möglich, nur einen Typ dieser Strukturen als auch beliebige Kombinationen dieser Strukturen auf der Haftmatte/-platte 4 in einer rasterförmigen Verteilung auszubilden. Beispiele für derartige erfindungsgemäße Raster sind in der Fig. 1 oben in der Draufsicht schematisch angedeutet.

Demnach umfasst die Haftmatte/-platte 4 eine Trägerschicht 11, auf der schematisch angedeutete Stäbchen 12, 13, 14 und/oder Zungen 15 derart abstehen, dass sie auftreffende Düngerkörner 2 in zwischen den Stäbchen 12 bis 14 und/oder Zungen 15 ausgebildeten Auffangräumen 16 einfangen und somit im Wesentlichen am Ort 6 ihres Auftreffens festhalten. Dies wird im Sinne der Erfindung als ein Anhaften der Düngerkörner 2 an/auf der Haftmatte/-platte 4 verstanden.

Die Stäbchen 12 bis 14 und/oder Zungen 15 können an ihrem freien Ende Haken 12a, 15a, Widerhaken 13a und/oder Pilzköpfe 14a aufweisen, wie dies in der Fig. 2 schematisch angedeutet ist. Vorzugsweise sind die Stäbchen 12 bis 14 und/oder Zungen 15, insbesondere die daran ausgebildeten Haken 12a, 15a, Widerhaken 13a und/oder Pilzköpfe 14a, elastisch verformbar, um die Düngerkörner 2 beim Auftreffen, möglichst sanft abzubremsen, in die dazwischen ausgebildeten Auffangräume 16 zu leiten und darin festzuhalten.

In der Fig. 2 ist ferner schematisch angedeutet, dass die Stäbchen 12 bis 14 und/oder Zungen 15 auf einer ersten wirksamen Seite 4a und auf einer zweiten wirksamen Seite 4b der Haftmatte/-platte 4 ausgebildet sein können. Um Düngerkörner 2, 2' unterschiedlicher Größe optimal einzufangen, können sich die auf unterschiedlichen wirksamen Seiten 4a, 4b ausgebildeten Stäbchen 12 bis 14 und/oder Zungen 15 hinsichtlich der zwischen ihnen ausgebildeten Auffangräume 16, 16' unterscheiden, insbesondere hinsichtlich der Grundfläche und/oder Höhe der Auffangräume 16, 16' und/oder hinsichtlich ihrer Rasterweite 17 bzw. 17'.

In der Fig. 2 sind die Stäbchen 12 bis 14 in einer seitlichen Ansicht und die Zungen 15 in einer Vorderansicht dargestellt. Dies dient lediglich dem besseren Verständnis. Die Stäbchen 12 bis 14 und/oder Zungen 15 lassen sich in beliebiger Orientierung zueinander anordnen, um ein an bestimmte Düngerkörner 2, 2' angepasstes Auffangraster erfindungsgemäß auszubilden.

Die wirksamen Seiten 4a und 4b der Haftmatte/-platte 4, also die entsprechenden Seiten der Trägerschicht 11 und die davon erfindungsgemäß abstehenden Strukturen, können sich insbesondere hinsichtlich ihrer Farbe und/oder Graustufe unterscheiden, um einen geeigneten Bildkontrast in den Kamerabildern 10 auch für unterschiedlich helle und/oder gefärbte Düngerkörner 2, 2' zu erzielen. Vorzugsweise ist wenigstens eine wirksame Seite 4a, 4b der Haftmatte/-platte 4 nicht heller als Graustufe 50%, wie beispielsweise 122 von 255 (weiß). Damit lassen sich die meisten Düngersorten aufgrund ihrer überwiegend hellen Färbung besonders kontrastreich auf der Haftmatte/-platte 4 in den Kamerabildern 10 darstellen. Farbe und/oder Graustufe der wirksamen Seiten 4a, 4b lassen sich nahezu beliebig an spezielle Düngersorten anpassen.

Auf den Haftmatten/-platten 4 können ferner Identifikationsmarkierungen 18 zu deren Identifizierung in den Kamerabildern 10 und/oder Positionierungsmarkierungen 19 für ein lückenloses oder überlappendes Aneinanderreihen mehrerer Kamerabilder 10 vorhanden sein. Beispielsweise kann ein durchnummerierter Satz Haftmatten/-platten 4 in mehreren Kamerabildern 10 aufgenommen und bei der Bildauswertung dann in korrekter Reihenfolge aneinandergesetzt und ausgewertet werden. Entsprechend lässt sich daraus eine örtliche Verteilung der Düngerkörner 2 auf den, und insbesondere entlang mehrerer, Haftmatten/-platten 4 berechnen. Ist die Haftmatte/-platte 4 beispielsweise als ausrollbarer Streifen ausgebildet, der sich nicht in einem einzelnen Kamerabild 10 abbilden lässt, so dienen vorzugsweise in Längsrichtung der Haftmatte/-platte 4 verteilte Positioniermarkierungen 19 dazu, mehrere Kamerabilder 10 in der richtigen Reihenfolge und lückenlos für die Bildauswertung aneinander zu reihen.

Die Trägerschicht 11 kann sowohl starr als auch flexibel ausgebildet sein. Die Stäbchen 12 bis 14 und/oder Zungen 15 sind vorzugsweise elastisch verformbar ausgebildet, so dass auftreffende Düngerkörner 2 in geeigneter Weise eingefangen und festgehalten werden. Die Stäbchen 12 bis 14 und/oder Zungen 15 und die Trägerschicht 11 sind vorzugsweise derart ausgebildet, dass sich die eingefangenen Düngerkörner 2 nach der Messung der Verteilung der Düngerkörner 2 aus den Auffangräumen 16 wieder ausklopfen lassen. Somit können Fehler auf Grund von Düngerresten bei späteren Messungen vermieden werden.

Die Größe der Auffangräume 16 ist derart an die Größe der einzufangenden Düngerkörner 2, 2' angepasst, dass die Düngerkörner 2, 2' im Wesentlichen am Ort 6 ihres Auftreffens auf der Haftmatte/-platte 4 liegend in einer Draufsicht Bild gebend registriert werden können. Darunter ist zu verstehen, dass entweder einzelne Düngerkörner 2, 2' erkannt werden und/oder eine in einem Auffangraum 16 vorhandene Gruppe von Düngerkörnern 2, 2' erkannt und ausgewertet wird. Unter einer Einsehbarkeit der Auffangräume 16, 16' von oben ist hierbei definitionsgemäß zu verstehen, dass sich Bild gebend in der orthogonalen Draufsicht auf einen Auffangraum 16, 16' erkennen lässt, ob sich darin wenigstens ein Düngerkorn 2, 2' befindet.

Beispielsweise könnten Auffangräume 16 für Düngerkörner 2 mit Durchmessern von 1 bis 3 mm mit einer Rasterweite von 6 mm vorhanden sein. Ein einzelner Auffangraum 16 könnte dann sowohl ein einzelnes Düngerkorn mit 3 mm Durchmesser aufnehmen als auch vier Düngerkörner mit 1 mm Durchmesser. Selbst für den Fall, dass die Bildauswertung dies nicht unterscheidet und lediglich den Auffangraum 16 als gefüllt erkennt, wäre der dadurch verursachte Quantifizierungsfehler hinnehmbar, zumal lediglich eine relative Verteilung der Düngerkörner 2 über die Messfläche benötigt wird, insbesondere lediglich in einer Richtung 2a quer zur Fahrtrichtung 3a.

Geeignete lichte Weiten der Auffangräume 16 liegen vorzugsweise im Bereich von 2 bis 5 mm. Damit lassen sich Düngerkörner 2 herkömmlicher Düngersorten, die beispielsweise Korngrößen von 1 mm bis 3 mm aufweisen, in den Auffangräumen 16 einzeln und/oder in geeignet kleinen Gruppen von beispielsweise höchstens fünf Düngerkörnern 2 auffangen. Je nach dem Profil der zwischen den Auffangräumen 16 abstehenden Stäbchen 12 bis 14 und/oder Zungen 15 ergeben sich daraus günstige Rasterweiten 17 von etwa 5 bis 10 mm. Diese Werte lassen sich jedoch an die auszustreuende Düngersorte nach Belieben anpassen.

Die Rasterweite 17 muss nicht zwangsläufig in beiden Oberflächendimensionen (Länge und Breite) der Haftmatte/-platte 4 identisch sein, da im Grunde nur eine Düngerverteilung quer zur Fahrtrichtung 3a zu bestimmen ist. Gegebenenfalls ist die Rasterweite 17 dann in der Richtung des jeweils kleineren Rasters definiert, das vorzugsweise in Längsrichtung der Haftmatte/-platte 4 ausgebildet ist.

Die vorliegende Erfindung ermöglicht die Bild gebende Auswertung der Düngerverteilung durch Registrieren einzelner Düngerkörner 2 und/oder kleiner Gruppen von Düngerkörnern 2 in den Kamerabildern 10 im Wesentlichen am Ort 6 ihres Auftreffens. Die Verteilung wird somit an den auf der Haftmatte/-platte 4 liegenden Düngerkörnern 2 gemessen, insbesondere unmittelbar auf dem vom Düngerstreuer befahrenen Bodenbereich 5. Im Gegensatz dazu ist ein Sammeln der Düngerkörner in herkömmlichen Auffangrastern zu sehen, mit einer Auswertung nach Entnahme und Transfer der gesammelten Düngerkörner, beispielsweise mit einer Waage.

Erfindungsgemäß lässt sich mit der Vorrichtung 1 beispielsweise wie folgt arbeiten:
Wenigstens eine Haftmatte/-platte 4 wird im Wesentlichen quer zur Fahrrichtung 3a oder Fahrspur des Düngerstreuers 3 ausgelegt. Beim Vorbeifahren des Düngerstreuers 3 an der wenigstens einen Haftmatte/-platte 4 werden Düngerkörner 2 bei vorgegebenen Ist-Einstellwerten (Maschinenparametern) des Düngerstreuers 3 ausgestreut und dabei von der Haftmatte/-platte 4 im Wesentlichen jeweils am Ort 6 ihres Auftreffens eingefangen.

Die eingefangenen Düngerkörner 2 werden auf der Haftmatte/-platte 4 liegend in einer Draufsicht in wenigstens einem Kamerabild 10 digital abgebildet und dieses in der Recheneinheit 9 ausgewertet. Durch Berechnung einer Ist-Verteilung der Düngerkörner 2 entlang der wenigstens einen Haftmatte/-platte 4 wird überprüft, ob mit den Ist-Einstellwerten des Düngerstreuers 3 ein gewünschte Verteilungsqualität erzielt wird. Ist dies nicht der Fall, werden die Ist-Einstellwerte des Düngerstreuers 3 auf der Grundlage der gemessenen Ist-Verteilung der Düngerkörner 2 gezielt korrigiert / optimiert. Unter der Ist-Verteilung ist wie üblich die Düngermenge pro Flächeneinheit oder pro Längeneinheit, insbesondere quer zur Fahrtrichtung 3a, gemeint.

Die Ist-Einstellwerte des Düngerstreuers 3 könnten zu diesem Zweck entweder manuell am Mobilfunkgerät 8 eingegeben werden, oder von einem am Düngerstreuer 3 vorhandenen Bordcomputer 3b an die Recheneinheit 9 übermittelt werden, beispielsweise mittels drahtloser Datenverbindung mittels Bluetooth, WLAN oder dergleichen.

Ebenso könnten aus der gemessenen Ist-Verteilung der Düngerkörner 2 und den Ist-Einstellwerten des Düngerstreuers 3 Soll-Einstellwerte an den Bordcomputer 3b des Düngerstreuers 3, insbesondere mittels drahtloser Datenverbindung, übermittelt werden. Die Soll-Einstellwerte könnte dann entweder von dem Bordcomputer 3b des Düngerstreuers 3 automatisch übernommen werden, oder als Einstellempfehlung am Düngerstreuer 3 angezeigt und vom Anwender bestätigt oder editiert werden.

Die Berechnung der Düngerverteilung, also der Ist-Verteilung der Düngerkörner 2, könnte alternativ in einem zentralen Düngeservice-Server 20 erfolgen. Zu diesem Zweck können Bilddaten der Kamerabilder 10 mittels einer Datenübertragung 21, beispielsweise mittels Mobilfunk, an den Düngerservice-Server 20 übertragen werden, um dort die Bildauswertung und/oder die Berechnung der Ist-Verteilung der Düngerkörner 20 vorzunehmen. Es lassen sich in einem zentralen Düngerservice-Service 20 sowohl komplexe Berechnungsaufgaben lösen, als auch Messdaten und/oder Ergebnisdaten mit einer Datenbank 22 abgleichen. Die Datenbank 22 enthält insbesondere Einstellwerte für Düngerstreuer, die sich abfragen und mit der gemessenen Ist-Verteilung der Düngerkörner 2 abgleichen lassen, um Soll-Einstellwerte im Sinne von Einstellempfehlungen auszugeben.

Das Mobilfunkgerät 8 ist vorzugsweise programmierbar, um die Auswertung der Kamerabilder 10 und die Berechnung der Ist-Verteilung der Düngerkörner 2 mittels Mobilfunk-Applikation auszuführen. Dies ermöglicht dem Anwender eine vor Ort eigenständige und schnelle Anwendung. Eine Datenbank 22 mit Einstellwerten für Düngerstreuer und/oder zum Abgleich gemessener Ist-Düngerverteilungen oder dergleichen Zwecke lässt sich in das Mobilfunkgerät 8 ebenso auf flexible Weise einbinden und/oder laufend aktualisieren.

Die Erfindung wurde beispielhaft anhand eines Mobilfunkgeräts 8 beschrieben, das beispielsweise ein Mobilfunktelefon ist. Stattdessen könnten prinzipiell beliebige mobile und kommunikationsfähige Rechner, wie Notebooks, Tablet-PC oder dergleichen zur Bildauswertung, Berechnung der Düngerverteilung, Datenbankabfrage, Ausgabe von Ergebnissen und/oder Einstellempfehlungen verwendet werden. Ebenso ließen sich beliebige Kameras an derartige mobile Rechner anschließen oder in diese integrieren. Der Datenverkehr mit dem Düngeservice-Server 20 lässt sich prinzipiell über beliebige Heimnetzwerke, Telefonleitungen oder dergleichen bewerkstelligen.

## Patentansprüche

1. Verfahren zum Bestimmen einer Verteilung von Düngerkörnern (2), insbesondere quer zur Fahrtrichtung (3a) eines Düngerstreuers (3), mit den Schritten:
a) Auslegen wenigstens einer Haftmatte/-platte (4) zum Auffangen und Festhalten ausgestreuter Düngerkörner (2);
b) Ausstreuen der Düngerkörner (2) beim Überfahren eines von der Haftmatte/- platte (4) bedeckten Bodenbereichs (5) mit einem Düngerstreuer (3);
c) Abbilden der bestreuten Haftmatte/-platte (4) in wenigstens einem digitalen Kamerabild (10);
d) Lokalisieren der Düngerkörner (2) im Kamerabild (10) und Berechnen einer Ist-Verteilung der Düngerkörner (2) auf der Haftmatte/-platte (4) und/oder entlang mehrerer Haftmatten/-platten (4).

2. Verfahren nach Anspruch 1, wobei die Düngerkörner (4) mit einer Rasterweite (17) von höchstens 10 mm am Ort (6) ihres Auftreffens festgehalten werden.

3. Verfahren nach Anspruch 1 oder 2, wobei der Schritt d) in einem mobilen Rechner, insbesondere in einem programmierbaren Mobilfunkgerät (8), durchgeführt wird und/oder Bilddaten zur Durchführung des Schritts d) an einen zentralen Düngeservice-Server (20) übertragen werden.

4. Verfahren nach einem der vorigen Ansprüche, ferner mit einem Schritt e), in dem wenigstens ein Soll-Einstellwert des Düngerstreuers (3) auf Grundlage wenigstens eines Ist-Einstellwerts des Düngerstreuers und der berechneten Ist-Verteilung der Düngerkörner (2) ermittelt wird.

5. Verfahren nach Anspruch 3 und 4, wobei der Schritt e) in dem mobilen Rechner, insbesondere in dem programmierbaren Mobilfunkgerät (8), durchgeführt wird.

6. Verfahren nach Anspruch 4, wobei wenigstens der Schritt e) in einem Bordrechner (3b) zur Steuerung des Düngerstreuers (3) durchgeführt wird.

7. Verfahren nach Anspruch 6, wobei der Bordrechner (3b) ferner den Ist-Einstellwert durch den ermittelten Soll-Einstellwert ersetzt.

8. Vorrichtung zum Auffangen von einem Düngerstreuer (3) ausgestreuter Düngerkörner (2), mit einer auslegbaren Auffangfläche definierter Größe, **dadurch gekennzeichnet, dass** die Auffangfläche als Haftmatte/-platte (4) ausgebildet ist mit einem Raster aus von oben einsehbaren Auffangräumen (16) für die Düngerkörner (2) und einer Rasterweite (17) von nicht mehr als 10 mm.

9. Vorrichtung nach Anspruch 9, wobei wenigstens eine wirksame Seite (4a, 4b) der Haftmatte/-platte (4) nicht heller ist als Graustufe 50%.

10. Vorrichtung nach Anspruch 9 oder 10, wobei die Haftmatte/-platte (4) zwei wirksame Seiten (4a, 4b) aufweist, die sich hinsichtlich Farbe und/oder Graustufe und/oder hinsichtlich der Rasterweite (17, 17') unterscheiden.

11. Vorrichtung nach einem der Ansprüche 9 bis 11, wobei die Haftmatte/-platte (4) eine Trägerschicht (11) umfasst sowie Stäbchen (12 -14) und/oder Zungen (15), die von der Trägerschicht (11) um die Auffangräume (16) herum derart abstehen, dass sie auftreffende Düngerkörner (2) in die Auffangräume (16) leiten und darin festhalten.

12. Vorrichtung nach Anspruch 12, wobei am freien Ende der Stäbchen (12 -14) und/oder Zungen (15) Haken (12a, 15a), Widerhaken (13a) und/oder Pilzköpfe (14a) ausgebildet sind.

13. Vorrichtung nach Anspruch 12 oder 13, wobei die Trägerschicht (11), Stäbchen (12 - 14) und/oder Zungen (15) elastisch verformbar ausgebildet sind.

14. Vorrichtung nach wenigstens einem der Ansprüche 9 bis 14, ferner mit einem Mobilfunkgerät (8) umfassend eine Kamera (7) und eine programmierbare Recheneinheit (9), auf der ein digitale Programm, insbesondere eine Mobilfunk-Applikation, zur Durchführung des Schritts d) gemäß Anspruch 1 und/oder des Schritts e) gemäß Anspruch 4 installiert ist.

## Claims

1. Method for determining a distribution of fertilizer grains (2), in particular transverse to the travelling direction (3a) of a fertilizer spreader (3), comprising the steps of:
a) laying down at least one fixing mat/plate (4) for collecting and holding scattered fertilizer grains (2);
b) scattering the fertilizer grains (2) while a fertilizer spreader (3) is being driven over a ground region (5) which is covered by the fixing mat/plate (4) ;
c) displaying the fixing mat/plate (4) on which the said fertilizer grains have been scattered in at least one digital camera image (10);
d) locating the fertilizer grains (2) in the camera image (10) and calculating an actual distribution of the fertilizer grains (2) on the fixing mat/plate (4) and/or along a plurality of fixing mats/plates (4).

2. Method according to Claim 1, wherein the fertilizer grains (4) are held at a screen width (17) of at most 10 mm at their site (6) of impact.

3. Method according to Claim 1 or 2, wherein step d) is carried out in a mobile computer, in particular in a programmable mobile radio device (8), and/or image data for carrying out step d) is transmitted to a central fertilizer service server (20).

4. Method according to one of the preceding claims, further comprising a step e) in which at least one setpoint adjustment value of the fertilizer spreader (3) is ascertained on the basis of at least one actual adjustment value of the fertilizer spreader and the calculated actual distribution of the fertilizer grains (2).

5. Method according to Claims 3 and 4, wherein step e) is carried out in the mobile computer, in particular in the programmable mobile radio device (8).

6. Method according to Claim 4, wherein at least step e) is carried out in an on-board computer (3b) for controlling the fertilizer spreader (3).

7. Method according to Claim 6, wherein the on-board computer (3b) further replaces the actual adjustment value with the ascertained setpoint adjustment value.

8. Apparatus for collecting fertilizer grains (2) which are scattered by a fertilizer spreader (3), comprising a collecting area of defined size which can be laid down, **characterized in that** the collecting area is in the form of a fixing mat/plate (4) with a screen comprising collection chambers (6), which can be inspected from above, for the fertilizer grains (2) and with a screen width (17) of not more than 10 mm.

9. Apparatus according to Claim 9, wherein at least one effective side (4a, 4b) of the fixing mat/plate (4) is not brighter than a grayscale value of 50%.

10. Apparatus according to Claim 9 or 10, wherein the fixing mat/plate (4) has two effective sides (4a, 4b) which differ in terms of colour and/or grayscale and/or in terms of the screen width (17, 17').

11. Apparatus according to one of Claims 9 to 11, wherein the fixing mat/plate (4) comprises a carrier layer (11) and also rods (12-14) and/or tongues (15) which protrude from the carrier layer (11) around the collection chambers (16) in such a way that they conduct fertilizer grains (2) which strike them into the collection chambers (16) and hold them therein.

12. Apparatus according to Claim 12, wherein hooks (12a, 15a), barbs (13a) and/or mushroom heads (14a) are formed at the free end of the rods (12-14) and/or tongues (15).

13. Apparatus according to Claim 12 or 13, wherein the carrier layer (11), rods (12-14) and/or tongues (15) are of elastically deformable design.

14. Apparatus according to at least one of Claims 9 to 14, further having a mobile radio device (8) comprising a camera (7) and a programmable computer unit (9) on which a digital program, in particular a mobile radio application, for carrying out step d) according to Claim 1 and/or step e) according to Claim 4 is installed.

## Revendications

1. Procédé de détermination de la répartition de granulés d'engrais (2), en particulier transversalement par rapport à la direction d'avancement (3a) d'un répartiteur d'engrais (3), le procédé présentant les étapes suivantes :
a) placement d'au moins un plateau ou tapis adhésif (4) destiné à reprendre et à retenir les granulés d'engrais (2) qui ont été répartis,
b) répartition des grains d'engrais (2) lors du passage d'un répartiteur d'engrais (3) au-dessus d'une partie (5) du sol couverte par le plateau ou tapis adhésif (4),
c) formation de l'image du plateau ou du tapis adhésif (4) couvert de granulés en au moins une image numérique (10) de caméra et
d) localisation des granulés d'engrais (2) dans l'image (10) de la caméra et calcul d'une répartition effective des granulés d'engrais (2) sur le plateau ou tapis adhésif (4) et/ou le long de plusieurs plateaux ou tapis adhésifs (4).

2. Procédé selon la revendication 1, dans lequel les granulés d'engrais (4) sont retenus à un pas de grille (17) d'au plus 10 mm à l'emplacement (6) où ils aboutissent.

3. Procédé selon les revendications 1 ou 2, dans lequel l'étape d) est exécutée dans un calculateur mobile, en particulier un appareil (8) de radiotéléphonie mobile, et/ou dans lequel des données d'image permettant d'exécuter l'étape d) sont transmises à un serveur central (20) de service d'engrais.

4. Procédé selon l'une des revendications précédentes, et présentant en outre une étape e) dans laquelle au moins une valeur de consigne de réglage du répartiteur d'engrais (3) est déterminée sur la base d'au moins une valeur effective de réglage du répartiteur d'engrais et de la répartition effective calculée des granulés d'engrais (2).

5. Procédé selon les revendications 3 et 4, dans lequel l'étape e) est exécutée dans un calculateur mobile et en particulier dans l'appareil programmable (8) de radiotéléphonie mobile.

6. Procédé selon la revendication 4, dans lequel au moins l'étape e) est exécutée dans un calculateur de bord (3b) qui commande le répartiteur d'engrais (3).

7. Procédé selon la revendication 6, dans lequel le calculateur de bord (3b) remplace en outre la valeur effective de réglage par la valeur de consigne de réglage qui a été déterminée.

8. Ensemble de reprise de grains d'engrais (2) répartis par un répartiteur d'engrais (3), l'ensemble présentant une surface de reprise de taille définie qui peut être posée,
**caractérisé en ce que**
la surface de reprise est configurée comme plateau ou tapis adhésif (4) dont la trame formée d'espaces (16) de reprise des granulés d'engrais (2) visibles depuis le haut, le pas de trame (17) n'étant pas supérieur à 10 mm.

9. Ensemble selon la revendication 9, dans lequel au moins un côté actif (4a, 4b) du plateau ou tapis adhésif (4) n'est pas plus clair qu'un niveau de gris de 50 %.

10. Ensemble selon les revendications 9 ou 10, dans lequel le plateau ou tapis adhésif (4) présente deux côtés actifs (4a, 4b) dont la teinte, le niveau de gris et/ou le pas de trame (17, 17') sont différents.

11. Ensemble selon l'une des revendications 9 à 11, dans lequel le plateau ou tapis adhésif (4) comporte une couche porteuse (11) ainsi que de petits barreaux (12-14) et/ou de petites dents (15) qui débordent de la couche de support (11) autour des espaces de reprise (16) de telle sorte que les granulés d'engrais (2) qui y aboutissent soient conduits dans les espaces de reprise (16) et y soient immobilisés.

12. Ensemble selon la revendication 12, dans lequel des crochets (12a, 15a), des contre-crochets (13a) et/ou des têtes de champignon (14a) sont formés aux extrémités libres des petits barreaux (12-14) et/ou des dents (15).

13. Ensemble selon les revendications 12 ou 13, dans lequel la couche de support (11), les petits barreaux (12-14) et/ou les dents (15) sont élastiquement déformables.

14. Ensemble selon au moins l'une des revendications 9 à 14, doté en outre d'un appareil (8) de radiotéléphonie mobile comprenant une caméra (7) et une unité programmable de calcul (9) sur laquelle un programme numérique, en particulier une application de radiotéléphonie mobile, est installé en vue d'exécuter l'étape d) selon la revendication 1 et/ou l'étape e) selon la revendication 4.
